# EUROPÄISCHE PATENTSCHRIFT

(11) **EP 2 216 572 B1**
(45) Veröffentlichungstag und Bekanntmachung des Hinweises auf die Patenterteilung: **12.08.2015**
(21) Anmeldenummer: 10000388.8
(22) Anmeldetag: 18.01.2010
(51) Int. Cl.: F16K 3/02

(54) **Plattenschieber, insbesondere zum Absperren einer Medien führenden Leitung**
Gate valve, in particular for blocking a pipe transporting a medium
Robinet-vanne, notamment destiné à fermer une conduite écoulant un milieu

(30) Priorität: 05.02.2009 CH 1702009
(43) Veröffentlichungstag der Anmeldung: 11.08.2010
(73) Patentinhaber: Sistag AG Absperrtechnik, 6274 Eschenbach (CH)
(72) Erfinder: Sidler, Hans-Jörg, 6274 Eschenbach (CH)
(74) Vertreter: Luchs, Willi

(56) Entgegenhaltungen:
- EP-A1- 0 037 906
- DE-U1-202005 012 832
- US-A- 5 205 317
- US-A1- 2005 001 195

## Beschreibung

Die Erfindung bezieht sich auf einen Plattenschieber, insbesondere zum Absperren einer Medien führenden Leitung, mit einem eine Durchgangsöffnung aufweisenden mehrteiligen Gehäuse, in welchem eine von einem Antriebsorgan betätigbare Schieberplatte längsgeführt ist, wobei beidseitig zur Schieberplatte quer zu ihrer Verstellrichtung je eine Längsdichtung oberhalb der Durchgangsöffnung in einer Längsnut im Gehäuse angeordnet ist, und diese Längsdichtung jeweils ein elastisches Dichtungsprofil sowie an letztere wenigstens eine einseitig angrenzende Leiste aufweist.

Bei Plattenschiebern sind üblicherweise solche Längsdichtungen oberhalb der Durchgangsöffnung und zudem Dichtschnüre um diese Durchgangsöffnungen herum angeordnet. Damit kann das Medium nicht zwischen dem aus zwei flachen Gehäuseteilen und der dazwischen befindlichen verschiebbaren Schieberplatte auslaufen und es bilden sich somit keine Leckagen. Der Aufbau eines solchen Plattenschiebers ist beispielsweise in der Druckschrift EP-A-0 252 367 erläutert.

Da die Plattenschieber stets grösser gebaut werden müssen, d.h. es werden Nenndurchmesser der Durchgangsöffnungen bis zu 2000 Millimetern oder mehr gefordert, besteht die Problematik insbesondere bei diesen Längsdichtungen darin, dass diese zumindest partiell höheren Drücken bzw. Anpressdrücken ausgesetzt sind, zum einen aufgrund der Durchbiegungen des Gehäuses und zum andern wegen den breiteren Platten und der daraus entstehenden höheren Reibkräfte. Insbesondere neigen diese Längsdichtungen dazu, abgedreht zu werden und damit deren Dichtheit nicht mehr ausreichend gegeben ist.

Im Dokument EP-A-0 037 906 ist eine Querabdichtung bei einem Plattenschieber geoffenbart, bei welcher je ein Elastomer-Profil beidseitig zu einer Schieberplatte in jeweils einer Aussparung einer Gehäusehälfte angeordnet ist. In diesen Elastomer-Profilen ist jeweils eine Nut ausgebildet, in die eine PTFE-Schnur eingesetzt ist.

Einzig diese PTFE-Schnur ist im Betriebszustand in Kontakt mit der Schieberplatte. Diese neben der Dichtschnur bezeichneten Dichtlippen sind mit einem Abstand von der Vorderseite der Dichtschnur angeordnet. Diesem Elastomer-Profil kommt nur die Funktion der elastischen Andrückung zu und nicht eine direkte Dichtung mit der Platte. Es sind zwar in diesem Profil beidseits solche Längsriuten vorgesehen. Diese dienen aber bloss dazu, solche andrückenden Streifen aufzunehmen.

Die Druckschrift US-A-5,205,317 offenbart einen Verschluss mit einer quer zu einer Rohrdurchlass verschiebbaren Verschlüssplatte, die durch transversale Dichtungen abgedichtet sind. Diese bestehen aus einem Casing, einem Packmaterial und aus abstreifenden Plättchen. Diese Casing ist U-förmig ausgebildet und hat bei dem mit der Verschlussplatte in Kontakt tretenden Bodenbereich mehrere Rippen und dazwischen Vertiefungen.

Es ist damit nachteilig, dass diese Dichtungsanordnungen nur sehr bedingt Unebenheiten aufnehmen können, da einzig die Kompressibilitäten der Dichtschnur und der Elastomer-Profils bzw. dieses Casing und das Packmaterial dies ermöglichen.

Der vorliegenden Erfindung wurde demgegenüber die Aufgabe zugrundegelegt, einen Plattenschieber nach der eingangs erwähnten Gattung derart weiterzubilden, dass die Standzeiten bzw. Dichtungsfunktion dieser Längsdichtungen auch bei grossen Durchmessern der Durchgangsöffnungen verbessert werden.

Die Aufgabe ist erfindungsgemäss dadurch gelöst, dass das jeweilige elastische Dichtungsprofil bei den Längsdichtungen frontseitig zwei voneinander beabstandete, die Schieberplatte berührende Dichtlippen sowie im Mittenbereich beidseits nutenförmige Kammern aufweist.

Mit dieser erfindungsgemässen Lösung ist ein Dichtungssystem dieser Längsdichtungen geschaffen worden, welches Toleranzen bzw. Durchbiegungen bei dem Gehäuse und der Schieberplatte kompensiert und gegen die entstehenden hohen Druckkräfte dauerhaft standhält und sich somit ihre Lebensdauer derjenigen des gesamten Plattenschiebers annähert.

Nach der Erfindung ist beidseits des Dichtungsprofils je eine Leiste, welche eine Schabwirkung bei der Schieberplattenoberfläche erzielt, vorgesehen, und das Dichtungsprofil weist jeweils rückseitig einen die jeweilige Leiste hintergreifenden Schenkel auf. Damit ergibt sich eine schützende Wirkung auf die Dichtlippen insofern, als diese nicht seitlich zwischen der Schieberplatte und der In-nenwand des Gehäuses weggedrückt werden. Zudem stützen diese Leisten das zwischen diesen befindliche Dichtungsprofil.

Ein Ausführungsbeispiel der Erfindung sowie weitere Vorteile derselben sind nachfolgend anhand der Zeichnung näher erläutert. Es zeigt:
- Fig. 1: eine perspektivische Teilansicht mit teilweiser Schnittdarstellung des erfindungsgemässen Plattenschiebers,
- Fig.2: einen Teilschnitt durch die Längsdichtungen im verspannten Zustand des Plattenschiebers,
- Fig.3: einen Teilschnitt durch die Längsdichtungen im unverspannten Zustand des Plattenschiebers, d.h. ohne eingebaute Schieberplatte, und
- Fig.4: eine perspektivische Teilansicht mit teilweiser Schnittdarstellung im Eckbereich der Längsdichtung des Plattenschiebers.

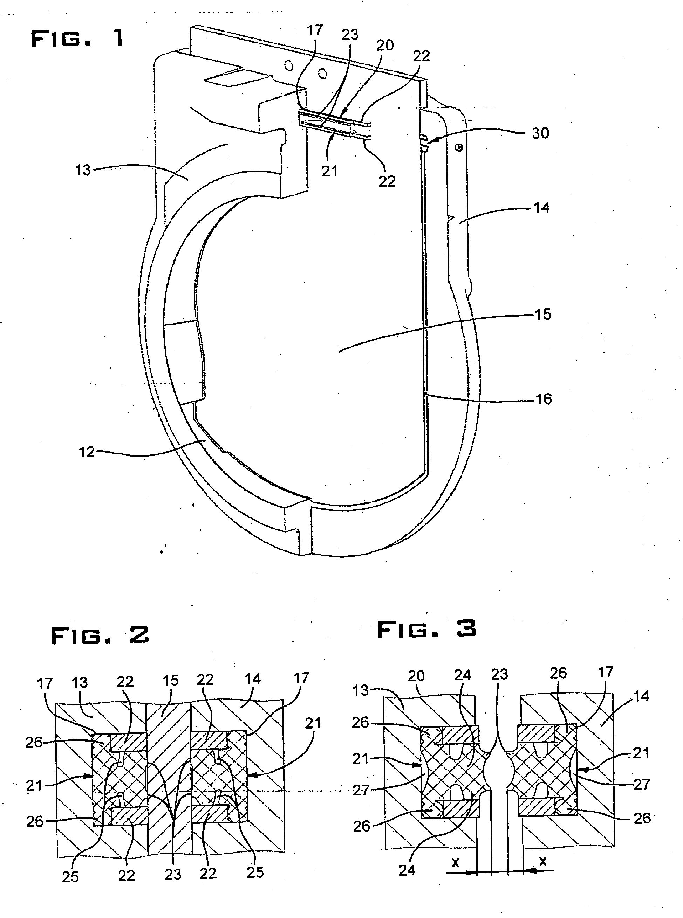

Fig.1 zeigt einen Plattenschieber 10, der sich insbesondere zum Absperren einer Medien führenden Leitung eignet, wobei als Medien beispielsweise in Kläranlagen Rohabwasser oder Schlamm, in der Chemie Granulate, chemische Flüssigkeiten etc., in der Lebensmittelindustrie Trinkflüssigkeiten, Getreide oder Spülflüssigkeiten und ähnliches verwendet werden.

Der teilweise dargestellte Plattenschieber 10 hat ein mit einer Durchgangsöffnung 12 versehenes mehrteiligen Gehäuse 13, 14, in welchem eine von einem nicht näher gezeigten Antriebsorgan betätigbare Schieberplatte 15 längsgeführt ist, durch letztere der Plattenschieber 10 von einer Offenposition in eine die Durchgangsöffnung 12 schliessende Stellung - wie dargestellt - verstellbar ist. Der vordere Gehäuseteil 13 ist im Längsschnitt, indessen der hintere Gehäuseteil 14 in Ansicht veranschaulicht ist. Beidseitig zur Schieberplatte 15 ist quer zu ihrer Verstellrichtung oberhalb der Durchgangsöffnung 12 je eine Längsdichtung 20 in je einer Längsnut 17 im Gehäuse 13, 14 angeordnet. Zudem ist eine Dichtschnur 16 im Gehäuse 13, 14 eingelegt, welche ausgehend von diesen Längsdichtungen 20 die Schieberplatte 15 in der Schliessstellung rundherum abdichtet.

Die jeweilige Längsdichtung 20 weist ein elastisches Dichtungsprofil 21 sowie je eine an letzteres beidseitig angrenzende Leiste 22 auf. Mit diesen Leisten 22 wird eine Schabwirkung bei der Plattenoberfläche erzielt. Wenn die Schieberplatte 15 aus der Schliessstellung nach oben geöffnet wird, so sorgen diese Leisten 22 für ein Abschaben des allfällig an der Plattenoberfläche haftenden Mediums, denn die Schieberplatte 15 ist in dem unterhalb der Längsdichtung 20 gebildeten Bereich vorteilhaft berührungsfrei zum Gehäuse 13, 14 angeordnet.

Erfindungsgemäss weist nach Fig.2 das jeweilige elastische Dichtungsprofil 21 der Längsdichtung 20 frontseitig zwei voneinander beabstandete, die Schieberplatte 15 berührende Dichtlippen 23 und annähernd mittig beidseits nutenförmige Kammern 25 auf. Ausserdem ist auf der Rückseite des Dichtungsprofils 21 auf beiden Seiten je ein die Leiste 22 hintergreifender Schenkel 26 vorhanden.

Diese vorstehenden Dichtlippen 23 sind jeweils im äusseren Bereich des Dichtungsprofils 21 angeordnet. Durch den gebildeten Abstand zueinander ermöglichen diese Dichtlippen 23 eine verbesserte Stabilität der Längsdichtung und demnach auch eine verringerte Gefahr eines Abdrehens bei einem Verstellen der Schieberplatte 15. Diese Dichtlippen 23 weisen ausserdem eine solche Höhe auf, dass im gespannten Betriebszustand nur diese und nicht die übrige Frontfläche dieses Dichtungsprofils 21 an der Schieberplatte 15 anliegen.

Die nutenförmigen Kammern 25 im Dichtungsprofil 21 sind als seitliche Ausnehmungen gebildet, derart, dass ihre Innenwände im zusammengedrückten Betriebszustand nicht einander berühren. Durch diese gebildeten Kammern 25 ergeben sich beim Dichtungsprofil 21 wie Hebel 24, so dass eine gewisse Verstellbarkeit bzw. Elastizität der Dichtlippen 23 in Richtung senkrecht zur Schieberplatte gewährleistet ist.

In Fig.3 ist die Formgebung dieser Längsdichtung 20 und mit ihr der Dichtungsprofile 21 im Querschnitt im unverspannten Zustand veranschaulicht. Das Dichtungsprofil 21 ist im Rahmen der Erfindung jeweils mit einer solchen Höhe versehen, dass es nach dem Einlegen in diese im Gehäuse 13, 14 enthaltenden Längsnut 17 senkrecht aus derselben um ein komprimierbares Mass x herausragt. Dieses Mass x ist so gewählt, dass dieses Dichtungsprofil 21 nach dem Verspannen, wie in Fig.2 dargestellt ist, einen definierten Anpressdruck auf die Schieberplatte ausübt.

Auf der Rückseite des Dichtungsprofils 21 ist fernerhin eine zwischen diesen Schenkeln 26 verlaufende Längsvertiefung 27 vorgesehen. Diese Längsvertiefung 27 ist vorzugsweise mit einer Tiefe annähernd wie das Mass x versehen, so dass diese sie im gespannten Betriebszustand durch das zusammengedrückte Dichtungsprofil wegfällt. Diese zwischen den Leisten 22 und dem Gehäuse 13, 14 befindlichen Schenkel 26 sind im Querschnitt gesehen gewölbt.

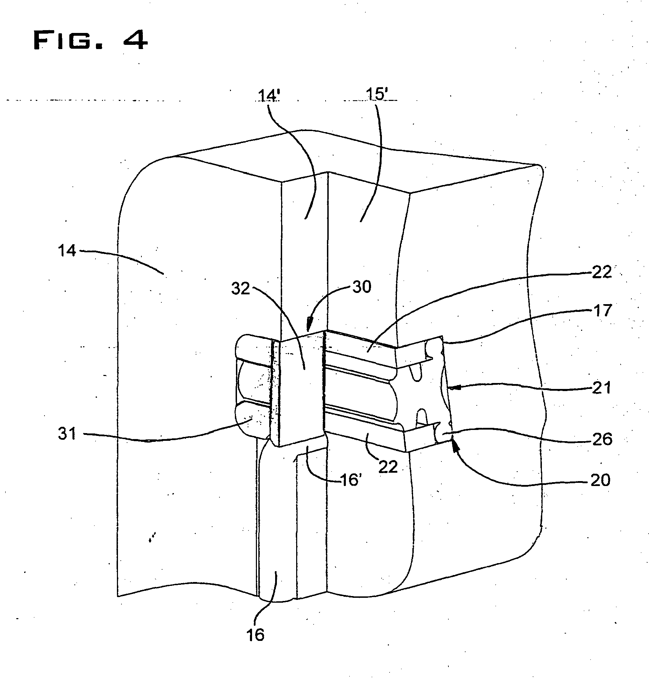

Fig.4 zeigt einen Ausschnitt des hinteren Gehäuseteils 14 mit montierter Längsdichtung 20, jedoch ohne die Schieberplatte 15, welche in die Ausnehmung 15' einsetzbar ist. Die Längsdichtung 20 in der Längsnut 17 erstreckt sich vorteilhaft bis hinter die Querwand 14' beim Gehäuseteil 14. Zusätzlich ist für die seitliche Abdichtung zwischen der Schieberplatte und dem Gehäuse nebst der Dichtschnur 16 eine Stirndichtung 30 vorgesehen, welche aus einem der Form der Frontseite des Dichtungsprofils 21 angepasstes, plastisch verformbares, allfällige Spalte füllendes Dichtelement 31 sowie eine in diesem geformte Dichtplatte 32 aufweist. Diese vorzugsweise aus Kunststoff bestehende Dichtplatte 32 grenzt oben und unten an die Leisten 22. Unterhalb dieser Dichtplatte 32 ist die Dichtschnur 16' quer durchgeführt. Selbstverständlich sind beidseitig zur Schieberplatte 15 solche Stirndichtungen 30 angeordnet, wie dies andeutungsweise aus Fig. ersichtlich ist.

Die Erfindung ist mit den oben erläuterten Ausführungsbeispielen ausreichend dargetan. Sie liesse sich jedoch noch in anderen Varianten darstellen. So könnte im Prinzip eine solche Leiste auch nur auf dieser der Durchgangsöffnung zugekehrten Seite in dieser Längsdichtung vorgesehen sein, das würde heissen, dass die andere Leiste und auch der zweite Schenkel bei dem Dichtungsprofil wegfallen. Der Schenkel könnte dabei gegebenenfalls als separate Schnur vorgesehen sein.

## Patentansprüche

1. Plattenschieber, insbesondere zum Absperren einer Medien führenden Leitung, mit einem eine Durchgangsöffnung (12) aufweisenden mehrteiligen Gehäuse (13, 14), in welchem eine von einem Antriebsorgan betätigbare Schieberplatte (15) längsgeführt ist, wobei beidseitig zur Schieberplatte (15) quer zu ihrer Verstellrichtung je eine Längsdichtung (20) oberhalb der Durchgangsöffnung in einer Längsnut (17) im Gehäuse (13, 14) angeordnet ist, und diese Längsdichtung (20) jeweils ein elastisches Dichtungsprofil (21) sowie eine an letztere wenigstens einseitig angrenzende Leiste (22) aufweist, **dadurch gekennzeichnet, dass** das jeweilige elastische Dichtungsprofil (21) frontseitig zwei voneinander beabstandete, die Schieberplatte (15) berührende Dichtlippen (23) und im Mittenbereich beidseits nutenförmige Kammern (25) aufweist, wobei beidseits des Dichtungsprofils (21) je eine Leiste (22), welche eine Schabwirkung bei der Schieberplattenoberfläche erzielt, zugeordnet ist, und das Dichtungsprofil (21) jeweils rückseitig einen die jeweilige Leiste (22) hintergreifenden Schenkel (26) aufweist.

2. Plattenschieber nach Anspruch 1, **dadurch gekennzeichnet, dass** das Dichtungsprofil (21) jeweils mit einer solchen Höhe versehen ist, dass es im unverspannten Zustand senkrecht aus der Längsnut (17) im Gehäuse (13, 14) um ein komprimierbares Mass (X) herausragt.

3. Plattenschieber nach Anspruch 1 oder 2, **dadurch gekennzeichnet, dass** jeweils auf der Rückseite des Dichtungsprofils (21) eine zwischen diesen im Querschnitt gewölbt ausgebildeten Schenkeln (26) verlaufende Längsvertiefung (27) vorgesehen ist.

4. Plattenschieber nach Anspruch 3, **dadurch gekennzeichnet, dass** die zwischen diesen Schenkeln (26) verlaufende Längsvertiefung (27) annähernd eine Tiefe wie das Mass (X) aufweist und dass dieselbe im gespannten Betriebszustand durch das zusammengedrückte Dichtungsprofil (21) wegfällt.

5. Plattenschieber nach einem der vorhergehenden Ansprüche 1 bis 4, **dadurch gekennzeichnet, dass** die vorstehenden Dichtlippen (23) jeweils im äusseren Bereich des Dichtungsprofils (21) angeordnet sind.

6. Plattenschieber nach einem der vorhergehenden Ansprüche 1 bis 5, **dadurch gekennzeichnet, dass** diese Dichtlippen (23) eine solche Höhe aufweisen, dass sie im gespannten Betriebszustand allein ohne die übrige Frontfläche dieses Dichtungsprofils an der Schieberplatte anliegen.

7. Plattenschieber nach einem der vorhergehenden Ansprüche 1 bis 6, **dadurch gekennzeichnet, dass** die nutenförmigen Kammern (25) im Dichtungsprofil (21) als seitliche Ausnehmungen gebildet sind, derart, dass ihre Innenwände im zusammengedrückten Betriebszustand nicht einander berühren, so dass die Elastizität der Dichtlippen (23) gewährleistet ist.

8. Plattenschieber nach einem der vorhergehenden Ansprüche 1 bis 7, **dadurch gekennzeichnet, dass** beidseitig zur Schieberplatte (15) je eine Längsdichtung (20) und zusätzlich in einer Querwand (14') beim Gehäuseteil (14) je eine Dichtung (30) vorgesehen ist, welche aus einem der Form der Frontseite des Dichtungsprofils (21) angepasstes Dichtelement (31) sowie aus einer an der Schieberplatte (15) anliegenden Dichtplatte (32) zusammengesetzt ist.

## Claims

1. A slide valve, in particular for closing a line conveying media, comprising a multi-part housing (13, 14), which has a passage opening (12) and in which a slider plate (15) operable by a drive organ is guided longitudinally, whereby to both sides of the slider plate (15), laterally to its direction of movement, a longitudinal seal (20) respectively being disposed above the passage opening in a longitudinal groove (17) in the housing (13, 14), and this longitudinal seal (20) respectively having an elastic sealing profile (21) and at least one bar (22) adjacent to the latter on one side, **characterised in that**
the respective elastic sealing profile (21) has on the front side two sealing lips (23) spaced apart from one another touching the slider plate (15) and in the central region groove-shaped chambers (25) on both sides, wherein a respective bar (22), which achieves a rasping effect on the surface of the slider plate, is assigned to both sides of the sealing profile (21), and the respective sealing profile (21) has on the rear side a side piece (26) engaging behind the respective bar (22).

2. The slide valve according to Claim 1, **characterised in that** the sealing profile (21) is respectively provided with a height such that in the non-braced state it projects perpendicularly out of the longitudinal groove (17) in the housing (13, 14) by a compressible dimension (x).

3. The slide valve according to any of the preceding Claims 1 or 2, **characterised in that** on the rear side of the sealing profile (21) a longitudinal indentation (27) extending between these side pieces (26) with a curved cross-section is respectively provided.

4. The slide valve according to Claim 3, **characterised in that** the longitudinal indentation (27) extending between these side pieces (26) has a depth roughly that of the dimension (x), and that the latter ceases to exist in the braced operating state due to the compressed sealing profile (21).

5. The slide valve according to any of the preceding Claims 1 to 4, **characterised in that** the projecting sealing lips (23) are respectively disposed in the outer region of the sealing profile (21).

6. The slide valve according to any of the preceding Claims 1 to 5, **characterised in that** these sealing lips (23) have a height such that in the braced operating state they only rest against the slider plate without the rest of the front surface of this sealing profile.

7. The slide valve according to any of the preceding Claims 1 to 6, **characterised in that** the groove-shaped chambers (25) in the sealing profile (21) are in the form of side recesses such that in the compressed operating state their walls do not touch one another so that the elasticity of the sealing lips (23) is guaranteed.

8. The slide valve according to any of the preceding Claims 1 to 7, **characterised in that** on both sides of the slider plate (15) a respective longitudinal seal (20) and additionally in a lateral wall (14') on the housing part (14) a respective seal (30) is provided, which is composed of a sealing element (31) matched to the shape of the front side of the sealing profile (21) and of a sealing plate (32) resting against the slider plate (15).

## Revendications

1. Robinet-vanne, notamment pour fermer un conduit conduisant des fluides, comprenant un corps (13, 14) en plusieurs parties, qui a une ouverture (12) de passage et dans lequel est guidée longitudinalement une plaque (15) formant obturateur, qui peut être actionnée par un organe d'entraînement, dans lequel, des deux côtés de la plaque (15) formant obturateur, est disposée, transversalement à sa direction de déplacement, respectivement une garniture (20) d'étanchéité longitudinale, au-dessus de l'ouverture de passage dans une rainure (17) longitudinale du corps (13, 14) et cette garniture (20) d'étanchéité longitudinale a respectivement un profilé (21) élastique de garniture d'étanchéité, ainsi qu'une barrette (22) délimitant sur ce dernier au moins d'un côté, **caractérisé en ce que** le profilé (21) de garniture d'étanchéité élastique a, du côté avant, deux lèvres (23) d'étanchéité à distance l'une de l'autre et touchant la plaque (15) formant obturateur et dans la partie médiane des chambres (25) en forme de rainures des deux côtés, dans lequel, des deux côtés du profilé (21) de garniture d'étanchéité, est associée respectivement une barrette (22), qui produit un effet de grattage, lorsque la surface de la plaque formant obturateur est atteinte, et le profilé (21) de garniture d'étanchéité a respectivement, du côté arrière, une branche (26) s'accrochant derrière la barrette (22) respective.

2. Robinet-vanne suivant la revendication 1, **caractérisé en ce que** le profilé (21) de garniture d'étanchéité a respectivement une hauteur telle que, dans l'état non serré, il sort, perpendiculairement à la rainure (17) longitudinale du corps (13, 14), d'une longueur (X) comprimable.

3. Robinet-vanne suivant la revendication 1 ou 2, **caractérisé en ce que** respectivement, sur le côté arrière du profilé (21) de garniture d'étanchéité, est prévue une cavité (27) longitudinale s'étendant entre ces branches (26) courbées en section transversale.

4. Robinet-vanne suivant la revendication 3, **caractérisé en ce que** la cavité (27) longitudinale s'étendant entre ces branches (26) a, à peu près, une profondeur égale à la longueur (X) et **en ce que** celle-là est, dans l'état de fonctionnement serré, supprimée par la compression du profilé (21) de garniture d'étanchéité.

5. Robinet-vanne suivant l'une des revendications précédentes 1 à 4, **caractérisé en ce que** les lèvres (23) d'étanchéité en saillie sont disposées respectivement dans la partie extérieure du profilé (21) de garniture d'étanchéité.

6. Robinet-vanne suivant l'une des revendications précédentes 1 à 5, **caractérisé en ce que** ces lèvres (23) d'étanchéité ont une hauteur telle qu'elles s'appliquent, dans l'état de fonctionnement serré, seules, sans le reste de la surface avant de ce profilé de garniture d'étanchéité, à la plaque formant obturateur.

7. Robinet-vanne suivant l'une des revendications précédentes 1 à 6, **caractérisé en ce que** les chambres (25) en forme de rainures du profilé (21) de garniture d'étanchéité sont sous la forme d'évidements latéraux, de manière à ce que leurs parois intérieures ne se touchent pas dans l'état de fonctionnement comprimé, de manière à garantir l'élasticité des lèvres (23) d'étanchéité.

8. Robinet-vanne suivant l'une des revendications précédentes 1 à 7, **caractérisé en ce qu'**il est prévu, des deux côtés de la plaque (15) formant obturateur, respectivement une garniture (20) d'étanchéité longitudinale et, en outre, dans une paroi (14') transversale de la partie (14) du corps, respectivement une garniture (30) d'étanchéité, qui se compose d'un élément (31) d'étanchéité adapté à la forme du côté avant du profilé (21) de garniture d'étanchéité, ainsi que d'une plaque (32) d'étanchéité s'appliquant à la plaque (15) formant obturateur.
